Europäisches Patentamt

European Patent Office

Office européen des brevets

(19)

(11) **EP 1 108 530 A1**

(12) **EUROPEAN PATENT APPLICATION**

(43) Date of publication:
**20.06.2001 Bulletin 2001/25**

(51) Int Cl.[7]: **B32B 27/32**, C08L 23/06

(21) Application number: **00201816.6**

(22) Date of filing: **24.05.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **13.12.1999 EP 99124749**

(71) Applicant: **FINA RESEARCH S.A.**
**7181 Seneffe (Feluy) (BE)**

(72) Inventors:
• **Marechal, Philippe**
  **1400 Nivelles (BE)**
• **Tavernier, Marc**
  **1800 Vilvoorde (BE)**

(54) **Medium density polyethylene compositions for easy-tear films**

(57)     Use of a homogeneous blend of a metallocene-catalysed medium density polyethylene (mMDPE) with low density polyethylene (LDPE), to produce blown films, this composition essentially consisting of from 0.5 to 99.5 % by weight of mMDPE and from 99.5 to 0.5 % by weight of LDPE, based on the total weight of the blend. The blend is optionally coextruded between layers of LDPE.

The compositions of this invention have good processability and are used to make shrink films which are easy to tear in the transverse direction while having a high yield force.

EP 1 108 530 A1

## Description

The present invention relates to polyethylene compositions and shrink films thereof combining good yield force, good shrink force and low tear force. This polyethylene composition can therefore be used for film applications, requiring this unique combination of properties, such as but not exclusively, food or non-food packaging, personal care products, agricultural or industrial products.

Low density polyethylene (LDPE) offers excellent optical properties and can be processed at low temperatures and pressures while maintaining a good melt strength. LDPE has however limited possibilities for down-gauging, due to a low draw ratio, and a low stiffness.

Linear-low-density polyethylene (LLDPE) has greatly improved down-gauging possibilities and excellent tear and impact properties; its stiffness however remains low and its processability is well below that of LDPE. Also, conventional LLDPE's optical properties do not match those of LDPE. Optical properties of LLDPE have been improved by using metallocene-catalysed LLDPE (mLLDPE) resins; stiffness is however not improved in these products and the processability of these grades is generally worse than that of conventional LLDPE.

Wherever high rigidity is needed, LDPE and LLDPE compositions will require overly thick structures. Especially for LLDPE, where excellent impact and tear properties render its down-gauging capability useful, the lack of rigidity is a main drawback because high rigidity is a requirement for product handling.

Conventional medium density polyethylene (MDPE) offers an improved rigidity, excellent processability and down-gauging possibilities. MDPE however lacks the good optical properties of LDPE or LLDPE.

Blends of conventional MDPE with LDPE and/or LLDPE can be used for improving rigidity and/or down-gauging and/or processability of LDPE and/or LLDPE but do not provide their good optical properties. WO 95/27005 discloses mixtures of LDPE with LLDPE or mLLDPE. The stiffness of their resins is insufficient.

In addition, these films are typically not easy to tear because a tear initiated by a finger tends to propagate in the machine direction of the film and thus requires that the tear be re-initiated several times before the wrapped article is released. This is because the wrapping direction is the machine direction.

It is known to use easy-tear shrink films containing Surlyn ionomers from prior art document EP-A-0,537,080. That document discloses that specific ionomer products and special blowing conditions must be used in order to obtain the desired result. That method presents however two major drawbacks:

- the required blowing conditions cannot be realised on all machines;
- Surlyn type ionomers are expensive.

There is therefore a need in the art to produce shrink films that are easy to tear in the transverse direction of the film, in order to easily release the wrapped goods, and yet that have a high yield force, a high shrink force and good optical properties. In this invention, easy tear is defined as the stable propagation of a tear in transverse direction under low tear force. This is a condition for the easy release of wrapped articles.

It is therefore an object of the present invention to provide polyethylene compositions for films, prepared with one or more layers, that are easy to tear in the transverse direction.

It is another object of the present invention to provide polyethylene compositions that can be used to prepare films with improved shrink properties.

It is yet a further object of the present invention to provide films that have a high yield strength.

In the present invention, a film is defined as an extremely thin continuous sheet: the upper limit for thickness is of about 250 microns (Hawley's Condensed Chemical Dictionary, Twelfth Edition, Rev. by R.J.Lewis, Van Nostrand Reinhold Co., New York)

This invention concerns films prepared from a homogeneous blend of a low density polyethylene (LDPE) and optionally a linear low density polyethylene (LLDPE) with a metallocene-catalysed medium density polyethylene (mMDPE), said blend comprising at least 0.5 % by weight of mMDPE and less than 99.5 % by weight of LDPE, based on the total weight of the blend, and said blend being optionally coextruded between two layers, each layer being a blend comprising a mixture of polymers such as LDPE and/or LLDPE and/or very low density polyethylene (VLDPE) and/or mMDPE and/or polyethylene vinyl acetate copolymers (EVA) and/or polyethylene butyl acetate copolymers (EBA) and/or ionomers, said external layers being the same or different, and the metallocene catalyst system comprising a bridged metallocene compound, alone or in combination with another metallocene catalyst which contributes less than 80% by weight of said catalyst combination.

They have good processability and down-gauging capabilities and are used to make films that are easy to tear while keeping good shrink strength and good yield force.

This result was unexpected as it is commonly accepted that the use of metallocene catalysts becomes less advantageous over the use of conventional catalysts as the density increases.

The manufacture of the low density and linear low density polyethylenes used in the present invention is known in the art and is described for example in "Encyclopedia of Polymer Science and Engineering", second edition, Volume 6, on pages 404 to 410 (LDPE) and pages 436 to 444 (LLDPE). Metallocene catalysts have not been employed to prepare the LDPE used in the blends of the present invention.

The catalyst system used in the present invention to manufacture medium density polyethylene comprises a bridged metallocene compound such as described in EP-A-0790259, preferably a bis tetrahydro-indenyl compound of the general formula $(IndH_4)_2R"MQ_2$ in which each Ind is the same or different and is indenyl or substituted indenyl, R" is a bridge which comprises a $C_1$-$C_4$ alkylene radical, a dialkyl germanium or silicon or siloxane, or an alkyl phosphine or amine radical, which bridge is substituted or unsubstitued, M is a Group IV metal or vanadium and each Q is hydrocarbyl having 1 to 20 carbon atoms or halogen.

Each bis tetrahydro-indenyl compound may be substituted in the same way or differently from one another at one or more positions in the cyclopentadienyl ring, the cyclohexenyl ring and the ethylene bridge.

Each substituent group may be independently chosen from those of formula $XR_V$ in which X is chosen from group IVA, oxygen and nitrogen and each R is the same or different and chosen from hydrogen or hydrocarbyl of from 1 to 20 carbon atoms and v+1 is the valence of X. X is preferably C. If the cyclopentadienyl ring is substituted, its substituent groups must not be so bulky as to affect coordination of the olefin monomer to the metal M. Substituents on the cyclopentadienyl ring preferably have R as hydrogen or $CH_3$. More preferably, at least one and most preferably both cyclopentadienyl rings are unsubstituted.

In a particularly preferred embodiment, both indenyls are unsubstituted.

R" is preferably a $C_1$-$C_4$ alkylene radical (as used herein to describe a difunctional radical, also called alkylidene), most preferably an ethylene bridge (as used herein to describe a difunctional radical, also called ethylidene), which is substituted or unsubstituted.

The metal M is preferably zirconium, hafnium or titanium, most preferably zirconium. Each Q is the same or different and may be a hydrocarbyl or hydrocarboxy radical having 1-20 carbon atoms or a halogen. Suitable hydrocarbyls include aryl, alkyl, alkenyl, alkylaryl or aryl alkyl. Each Q is preferably halogen.

Ethylene bis (4, 5, 6, 7-tetrahydro-1-indenyl) zirconium dichloride is a particularly preferred bis tetrahydroindenyl compound of the present invention.

The metallocene catalyst component used in the present invention can be prepared by any known method. A preferred preparation method is described in J. Org. Chem. 288, 63-67 (1985).

Any metallocene catalyst known in the art as suitable for the polymerization of olefins can be used in combination with the bis tetrahydro-indenyl compound, in an amount not to exceed 80% by weight of said combination.

These are described for example in EP Application n° 96200422.9.

They can be represented by the general formulae:

$$I.\ (Cp)_m MR_n X_q$$

wherein Cp is a cyclopentadienyl ring, M is a Group 4b, 5b or 6b transition metal, R is a hydrocarbyl group or hydrocarboxy having from 1 to 20 carbon atoms, X is a halogen, and m = 1-3, n = 0-3, q = 0-3 and the sum of m+n+q will be equal to the oxidation state of the metal.

$$II.\ (C_5R'_k)_g R"_s (C_5R'_k) MQ_{3-g}$$

and

$$III.\ R"_s (C_5R'_k)_2 MQ'$$

wherein $(C_5R'_k)$ is a cyclopentadienyl or substituted cyclopentadienyl, each R' is the same or different and is hydrogen or a hydrocarbyl radical such as alkyl, alkenyl, aryl, alkylaryl, or arylalkyl radical containing from 1 to 20 carbon atoms or two carbon atoms are joined together to form a $C_4$-$C_6$ ring, R" is a $C_1$-$C_4$ alkylene radical, a dialkyl germanium or silicon or siloxane, or a alkyl phosphine or amine radical bridging two $(C_5R'k)$ rings, Q is a hydrocarbyl radical such as aryl, alkyl, alkenyl, alkylaryl, or aryl alkyl radical having from 1-20 carbon atoms, hydrocarboxy radical having 1-20 carbon atoms or halogen and can be the same or different from each other, Q' is an alkylidene radical having from 1 to about 20 carbon atoms, s is 0 or 1, g is 0,1 or 2, s is 0 when g is 0, k is 4 when s is 1 and k is 5 when s is 0, and M is as defined above.

Exemplary hydrocarbyl radicals are methyl, ethyl, propyl, butyl, amyl, isoamyl, hexyl, isobutyl, heptyl, octyl, nonyl, decyl, cetyl, 2-ethylhexyl, phenyl and the like. Exemplary halogen atoms include chlorine, bromine, fluorine and iodine and of these halogen atoms, chlorine is preferred.

Exemplary hydrocarboxy radicals are methoxy, ethoxy, propoxy, butoxy, amyloxy and the like.

Exemplary of the alkylidene radicals are methylidene, ethylidene and propylidene, and i-butylidene.

The metallocenes may be supported. In the event it is supported, the support used in the present invention can be any organic or inorganic solids, particularly porous supports such as talc, inorganic oxides, and resinous support material such as polyolefin. Preferably, the support material is an inorganic oxide in its finely divided form.

Suitable inorganic oxide materials which are desirably employed in accordance with this invention include Group 2a, 3a, 4a or 4b metal oxides such as silica, alumina and mixtures thereof. Other inorganic oxides that may be employed either alone or in combination with the silica, or alumina are magnesia, titania, zirconia, and the like. Other suitable support materials, however, can be employed, for example, finely divided functionalized polyolefins such as finely divided polyethylene.

Preferably, the support is a silica having a surface area comprised between 200 and 600 $m^2/g$ and a pore volume comprised between 0.5 and 3 ml/g.

An active site must be created by adding a cocatalyst having an ionizing action. While alumoxane can be used as cocatalyst, it is not necessary to use alumoxane as cocatalyst during the polymerization procedure for preparing medium density polyethylene according to the process of the present invention.

When alumoxane is used as a cocatalyst, any alumoxane known in the art can be used in the present invention.

The preferred alumoxanes comprise oligomeric linear and/or cyclic alkyl alumoxanes represented by the formulae:

(IV) R- $(Al-O)_n$ - $AIR_2$ for oligomeric, linear alumoxanes and R

(V) $(-Al-O)_m$ for oligomeric, cyclic alumoxanes, R

wherein n is 1-40, preferably 10-20, m is 3-40, preferably 3-20 and R is a $C_1$-$C_8$ alkyl group and preferably methyl.

Generally, in the preparation of alumoxanes from, for example, trimethyl aluminum and water, a mixture of linear and cyclic compounds is obtained.

Methylalumoxane is preferably used.

The alumoxane is usually delivered as a concentrated solution of alumoxane in toluene.

When alumoxane is not used as a cocatalyst, according to a preferred embodiment of the present invention, one or more aluminiumalkyl represented by the formula $AIR_x$ are used wherein each R is the same or different and is selected from halides or from alkoxy or alkyl groups having from 1 to 12 carbon atoms and x is from 1 to 3. Especially suitable aluminiumalkyl are trialkylaluminium selected from trimethylaluminium, triethylaluminium, triisobutylaluminium, tri-n-octylaluminium or tri-n-hexylaluminium, the most preferred being triisobutylaluminium (TIBAL).

The amount of alumoxane or aluminiumalkyl and metallocene usefully employed in the preparation of the solid support catalyst can vary over a wide range. Preferably, the aluminium to transition metal mole ratio is comprised between 1:1 and 100:1, preferably between 5:1 and 50:1.

The metallocene catalyst utilized to produce the medium density polyethylene required by the present invention can be used in gas, solution or slurry polymerizations. Preferably, in the present invention, the polymerization process is conducted under slurry phase polymerization conditions. It is preferred that the slurry phase polymerization conditions comprise a temperature of from 20 to 125°C, preferably from 60 to 95°C and a pressure of from 0.1 to 5.6 MPa, preferably from 2 to 4 MPa for a time between 10 minutes and 4 hours, preferably between 1 and 2.5 hours.

It is preferred that the polymerization reaction be run in a diluent at a temperature at which the polymer remains as a suspended solid in the diluent. Diluents include, for examples, isobutane, n-hexane, n-heptane, methylcyclohexane, n-pentane, n-butane, n-decane, cyclohexane and the like. The preferred diluent is isobutane.

According to a preferred embodiment of the present invention, a continuous reactor is used for conducting the polymerization. This continuous reactor is preferably a loop reactor. During the polymerization process, at least one monomer, the catalytic system and a diluent are flowed in admixture through the reactor.

In the present invention average molecular weights can be further controlled by the introduction of some amount of hydrogen or by changing the temperature during polymerization. When hydrogen is used it is preferred that the relative amounts of hydrogen and olefin introduced into the polymerization reactor be within the range of about 0.001 to 15 mole percent hydrogen and 99.999 to 85 mole percent olefin based on total hydrogen and olefin present, preferably about 0.2 to 3 mole percent hydrogen and 99.8 to 97 mole percent olefin

The densities of the metallocene catalyzed polyethylenes (mMDPE) used in the present invention are regulated by the amount of comonomer injected in the reactor; they will range from 0.925 $g/cm^3$ to 0.955 $g/cm^3$ and preferably from 0.930 $g/cm^3$ to 0.945 $g/cm^3$. Examples of comonomer which can be used include 1-olefins butene, hexene, octene, 4-methyl-pentene, and the like, the most preferred being hexene. The melt indices of the metallocene catalyzed polyethylene (mMDPE) used in the present invention can be regulated by the amount of hydrogen injected in the reactor;

they will range from 0.05 g/10' to 5 g/10', preferably from 0.1 g/10' to 4 g/10'.

Research has been conducted on metallocene catalysts leading to a very wide range of polyethylene products with both narrow and broad molecular weight distribution (MWD).

In changing the MWD, resins are obtained with largely different viscous behavior. The shear response sensitivity is commonly expressed by the ratio (SR2) of melt flows (ASTM D-1238-89A at 190°C) with loads of 21.6 kg (HLMI) and 2.16 kg (ML2).Resins with a narrow MWD have typical SR2 values of about 15. The resins of the present invention have values going from the typical low values of about 15 for narrow MWD resins to values ranging from 15 to 70 depending on the bridged metallocene catalyst used for polymerisation, the production conditions and the Ml2-value of the resulting resin.

Standard additives may be used for both long term and processing stabilization and if desired, one or more pigments and/or dyes can also be added.

The applicants have found that the selection of catalyst composition and production conditions allows independent determination of Ml2, density and SR2 values. For conventional catalytic systems, the values of SR2 are, within rather narrow limits, defined by the choice of Ml2.

The mMDPE catalysed by the procedure described hereabove are used in blends with LDPE in various ratios.

According to embodiments of the present invention, compositions of LDPE with mMDPE are obtained either by preliminary dry blend or extrusion or by direct blend in the hopper or via the extruder.

Materials are run under production conditions for existing commercial applications where processability, down-gauging and good optics are key issues. Excellent outputs are achieved.

Generally, the blends of the present invention comprise at least 0.5 % by weight of mMDPE and less than % by weight of LDPE, based on the total weight of the blend. Preferably the composition of the present invention comprises at least 10 % by weight of mMDPE and less than 90 % by weight of LDPE, based on the total weight of the blend, more preferably at least 20 % by weight of mMDPE and less than 80 % by weight of LDPE. The resulting polyethylene has a density of from 0.930 to 0.955 g/cm$^3$ and a melt index Ml2 of from 0.2 to 10 g/10min.

In this specification, the density of the polyethylene is measured at 23 °C using procedures of ASTM D 1505.

The film is produced by coextruding the mMDPE/LDPE blend described hereabove between two layers, each layer being a blend comprising a mixture of polymers such as LDPE and/or LLDPE and/or mMDPE and/or VLDPE and/or EVA and/or BA and/or ionomers. The LDPE is prepared with a non-metallocene catalyst and the LLDPE is prepared either with a Ziegler-Natta catalyst or with a metallocene catalyst. The two external layers may be the same or different and each layer is from 0 to 33 wt% and preferably from 5 to 30 wt% of the total weight of the film.

Excellent transparency and gloss are obtained for all the compositions tested in the above mentioned ranges.

It is also observed that the mechanical properties of the films prepared with the compositions and process of the present invention are excellent, particularly the films exhibit a high yield force, good shrink force and low tear force.

The blown film is produced by the steps of:

a) preparing a first composition comprising a mixture of polymers such as LDPE and/or LLDPE and/or mMDPE and/or VLDPE and/or EVA and/or EBA and/or ionomers;

b) preparing a blend of at least 0.5 % by weight of a metallocene-catalysed medium density polyethylene (mMDPE) with less than 99.5 % by weight of a low density polyethylene prepared with a non-metallocene catalyst (LDPE), based on the total weight of the blend, said blend having a density of from 0.93 to 0.955 g/cm$^3$ and a melt index M12 of from 0.2 to 10 g/10min, and the metallocene catalyst system consisting of a bridged metallocene compound, alone or in combination with another metallocene catalyst which contributes less than 80 % by weight of said metallocene;

c) preparing a second composition comprising a mixture of polymers such as LDPE and/or LLDPE and/or mMDPE and/or VLDPE and/or EVA and/or EBA and/or ionomers, said composition being the same or different from the composition of step a);

d) coextruding the blend of step b) between a layer prepared from the composition of step a) and a layer prepared from the composition of step c), said blend of step b) representing from 33 to 100 % by weight of the total weight of the film;

e) blowing the coextrudate of step d) to prepare a blown film with easy tear properties.

The films prepared according to this invention have thus improved clarity and gloss, excellent and balanced tear properties, high impact resistance while maintaining standard down-gauging possibilities, high yield force, good shrinkage and easy tearability.

EXAMPLES:

1. Polymerization procedure and product composition.

The polymerization of metallocene-catalysed medium density polyethylene of the present invention was carried out in a liquid-full slurry loop reactor. Ethylene was injected with 1-hexene together with the catalyst. Isobutane was used as diluent. The polymerization conditions are indicated in Table I

TABLE I

|  | Resin R1 |
|---|---|
| C2 feed (kg/h) | 1600 |
| C6 feed (g/kg C2) | 43 |
| H2 feed (mg/h) | 10000 |
| Iso C4 feed (kg/h) | 1950 |
| Tibal conc (ppm) | 500 |
| Tpol (°C) | 86 |
| C2 = ethylene<br>C6 = 1-hexene<br>Iso C4 = isobutane<br>TIBAL = triisobutylaluminium | |

The bridged metallocene catalyst was ethylene bis (tetrahydro-indenyl) zirconium dichloride.
The data concerning resin R1 are summarised in Table II.

TABLE II.

|  | R1 |
|---|---|
| Density g/cm$^3$ | 0.934 |
| MI2 g/10 min | 0.9 |
| HLMI g/10 min | 25 |
| SR2=HLMI/MI2 | 28 |

The resin R1 was then blended with a LDPE in the proportions of 30 % by weight of resin R1 and 70 % by weight of LDPE in order to produce the blend B1. The MI2 of the LDPE was 0.7 g/10 min.
A blend B2 was prepared with the same ingredients in different proportions: 20 % by weight of resin R1 and 80 % by weight of LDPE.
A comparison blend B3 was prepared by mixing 20 % by weight of LLDPE and 80 % by weight of the same LDPE as that used in blends B1 and B2.

2. Film preparation.

Three films were prepared.
Film F1 was prepared from the blend B1; it was blown using a low density configuration characterised by a die of 180 mm, a BUR of 2.7, no neck and a die gap of 1.2 mm. The film was down-gauge to a thickness of 45 microns.
Film F2 was prepared similarly as film F1 from the blend B2. The film was downgauged to a thickness of 57 microns.
Film F3, used for comparison was prepared from blend B3. The film was downgauged to a thickness of 57 microns.

3. Film properties.

The stress at yield and the associated yield force of the film were measured using the method of ASTM-D 882. The tear property of the film was measured using the Trouser tear test following the method of ISO. 6383/1-1983.

The tear stress is defined as the ratio of the tear force to the film thickness.

The Elmendorf tear was measured using the method of ASTM-D 1922.

The gloss was measured at an angle of 45° with the Byk-Gardner micro-gloss reflectometer; the haze was measured with the Byk-Gardner Hazegard® system. The stress at yield was measured by ASTM D 882 method.

These results are summarised in Table III.

TABLE III.

|  | F1 | F2 | F3 |
|---|---|---|---|
| Haze% | 10 | 10.7 | 11 |
| Gloss % | 70 | 70 | 66 |
| Stress at yield (Mpa) | 14.7 | 13.4 | 12.4 |
| Stress at break (Mpa) | MD*=26 TD**=25 | MD=25 TD=22 | MD=29 TD=23 |
| Yield force (N) | 8.3 | 9.6 | 8.9 |
| Elmendorf Tear (N/mm) | *MD =80 **TD =108 | MD=90 TD=99 | MD=97 TD=107 |
| Tear force in TD (N) | 11 | 12.5 | 14 |
| Tear stress in TD (mN/μ) | 244 | 219 | 246 |

*MD is for machine direction.

**TD is for transverse direction.

It can be observed from Table III that the tear force in the transverse direction for films F1 and F2 prepared according to the present invention is lower than for comparative film F3 even though the yield force is similar.

It has been further observed that the displacement in the machine direction is much lower than that in the transverse direction. This is because the tear goes straight in the transverse direction while it runs out of the sample in the machine direction. All the samples studied exhibited the same behaviour.

**Claims**

1. Use of a composition comprising:

   (i) An optional first layer based on a blend comprising a mixture of polymers such as low density polyethylene (LDPE) and/or a linear low density polyethylene (LLDPE) and/or a metallocene medium density polyethylene (mMDPE) and/or EVA and/or EBA and/or ionomers;

   (ii) a second layer of a homogeneous blend of a low density polyethylene (LDPE) and optionally a linear low density polyethylene (LLDPE) with a metallocene catalysed medium density polyethylene (mMDPE), this blend essentially consisting of at least 0.5 % by weight of mMDPE and less than 99.5 % by weight of LDPE, based on the total weight of the blend, and having a density of from 0.925 to 0.955 g/cm$^3$, and the metallocene catalyst system consisting of a bridged metallocene compound, alone or in combination with another metallocene catalyst which contributes less than 80% by weight of said metallocene;

   (iii) an optional third layer based on a blend comprising a Imixture of polymers such as low density polyethylene (LDPE) and/or a linear low density polyethylene (LLDPE) and/or a metallocene medium density polyethylene (mMDPE) and/or EVA and/or EBA and/or ionomers, said third layer being the same as or different from the first layer to prepare an easy-rear shrink film.

2. The use according to claim 1 wherein the blend in the second layer comprises at least 10 % by weight of mMDPE.

3. The use according to claim 1 or claim 2, wherein the bridged metallocene catalyst is a bis tetrahydro-indenyl compound.

4. The use according to any one of the preceding claims, wherein the bridged metallocene is a ethylene bis tetrahydro-indenyl zirconium compound.

5. The use according to any one of the preceding claims, wherein the two external layer have the same composition.

6. The use according to any one of the preceding claims wherein the optional first layer (i) and/or the optional third layer (iii) are based on a blend comprising LDPE and/or LLDPE.

7. The use according to claim 6 wherein the LLDPE of the optional first layer and/or of the optional third layer can be replaced in part or in total by mMDPE.

8. The use according to any one of the preceding claims, wherein each of the two external layers represent from 5 to 33 wt % of the total weight of the film.

9. The use according to any one of the preceding claims, wherein the two external layers have the same thickness.

10. Use of the easy-tear shrink films of any one of claims 1 to 9 for shrink and shrink-wrap packaging.

**European Patent Office**

## EUROPEAN SEARCH REPORT

Application Number

EP 00 20 1816

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 0 844 277 A (FINA RESEARCH) 27 May 1998 (1998-05-27) | 1-10 | B32B27/32 C08L23/06 |
| Y | * abstract; claims 1-4 * * page 2, line 30 - page 5, line 35 * | 1-10 | |
| D,Y | EP 0 537 080 A (SODAP ;DU PONT INT (CH)) 14 April 1993 (1993-04-14) * abstract; claims 1-17; example 9 * | 1-10 | |
| A | "ALLOYS OF MEDIUM AND LOW DENSITY POLYETHYLENE" RESEARCH DISCLOSURE,GB,INDUSTRIAL OPPORTUNITIES LTD. HAVANT, no. 363, 1 July 1994 (1994-07-01), page 349 XP000461299 ISSN: 0374-4353 * abstract * | 1-10 | |

TECHNICAL FIELDS SEARCHED (Int.Cl.7)

C08L
B32B

The present search report has been drawn up for all claims

| Place of search | Date of completion of the search | Examiner |
|---|---|---|
| THE HAGUE | 15 February 2001 | Bergmans, K |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 00 20 1816

This annex lists the patent family members relating to the patent documents cited in the above-mentioned European search report.
The members are as contained in the European Patent Office EDP file on
The European Patent Office is in no way liable for these particulars which are merely given for the purpose of information.

15-02-2001

| Patent document cited in search report | | Publication date | Patent family member(s) | | Publication date |
|---|---|---|---|---|---|
| EP 0844277 | A | 27-05-1998 | EP | 0844258 A | 27-05-1998 |
| | | | EP | 0870802 A | 14-10-1998 |
| | | | US | 6114456 A | 05-09-2000 |
| EP 0537080 | A | 14-04-1993 | AT | 141545 T | 15-09-1996 |
| | | | CA | 2080286 A | 12-04-1993 |
| | | | DE | 69212945 D | 26-09-1996 |
| | | | DE | 69212945 T | 16-01-1997 |
| | | | DK | 537080 T | 16-09-1996 |
| | | | ES | 2090548 T | 16-10-1996 |
| | | | JP | 2007192 C | 11-01-1996 |
| | | | JP | 6055632 A | 01-03-1994 |
| | | | JP | 7025133 B | 22-03-1995 |
| | | | KR | 9507246 B | 07-07-1995 |
| | | | NO | 923913 A | 13-04-1993 |
| | | | US | 5356677 A | 18-10-1994 |
| | | | ZA | 9207784 A | 10-05-1993 |